# EUROPEAN PATENT APPLICATION

(11) **EP 2 157 822 A2**
(43) Date of publication of application: **24.02.2010**
(21) Application number: 09167998.5
(22) Date of filing: 17.08.2009
(51) Int. Cl.: H04W 24/04

(54) **Data transmission control method and base transceiver station**

(30) Priority: 18.08.2008 JP 2008209952
(71) Applicant: FUJITSU LIMITED, Kawasaki-shi, Kanagawa 211-8588 (JP)
(72) Inventor: Hirata, Shuya, Kawasaki-shi Kanagawa 211-8588 (JP)
(74) Representative: Fenlon, Christine Lesley

(57) **Abstract**

A data transmission control method in a radio communication system with a mobile station having a number of antennas and a base transceiver station having a number of antennas, the data transmission control method includes detecting a failure of radio equipment connected to each of the antennas of the base transceiver station or to each of specified groups of the antennas to perform radio communication processing for a connected antenna, and outputting failure information corresponding to the detected failure. The data transmission control method includes determining a failed antenna based on the failure information, and exercising control so that generation processing of transmission code words corresponding to the failed antenna is not performed.

## Description

### FIELD

The present invention relates to a data transmission control method and a base transceiver station.

### BACKGROUND

In recent years, MIMO (Multiple Input Multiple Output) communication is adopted in the field of radio communication .
MIMO is a technology in which communication is performed by using a plurality of antennas each set up on a transmitting side and a receiving side, and is one of the important technologies supporting fourth-generation mobile communication.

MIMO is divided into a diversity transmission method by which the same data is transmitted from a plurality of antennas for the purpose of improving communication quality and a space division multiplexing method by which different data is transmitted from a plurality of antennas for the purpose of improving throughput. Moreover, each method is divided into an open loop method and a closed loop method.

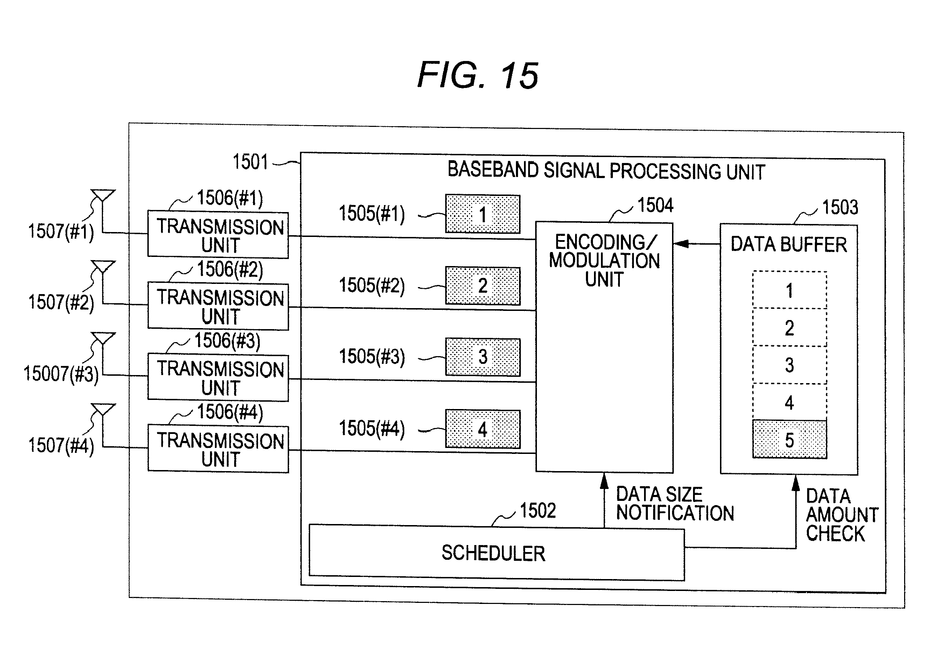

In the open loop MIMO communication method by space division multiplexing, different data is transmitted from a plurality of antennas, regardless of feedback information. FIG. 15 is a diagram illustrating a configuration example of an open loop MIMO transmission system of the space division multiplexing method in a 4-antenna configuration. In a baseband signal processing unit 1501, a scheduler 1502 checks the amount of data stored in a data buffer 1503 and notifies an encoding/modulation unit 1504 of the data size in accordance with the amount of accumulated data. The encoding/modulation unit 1504 performs encoding and modulation processing by space division on data stored in the data buffer 1503 according to the notified amount of data. As a result, baseband transmission signals 1505 divided into four spaces #1 to #4 are output from the encoding/modulation unit 1504. Each of these baseband transmission signals 1505 #1 to #4 is amplified in power by each of transmission units 1506 #1 to #4 before being transmitted from each of antennas 1507 #1 to #4.

In the closed loop MIMO communication method by space division multiplexing, receiving quality for combinations of antennas on the receiving side is measured and feedback of the combination among these combinations that provides optimal quality is given. The transmitting side uses the feedback information to decide the combination of antennas used for transmission.

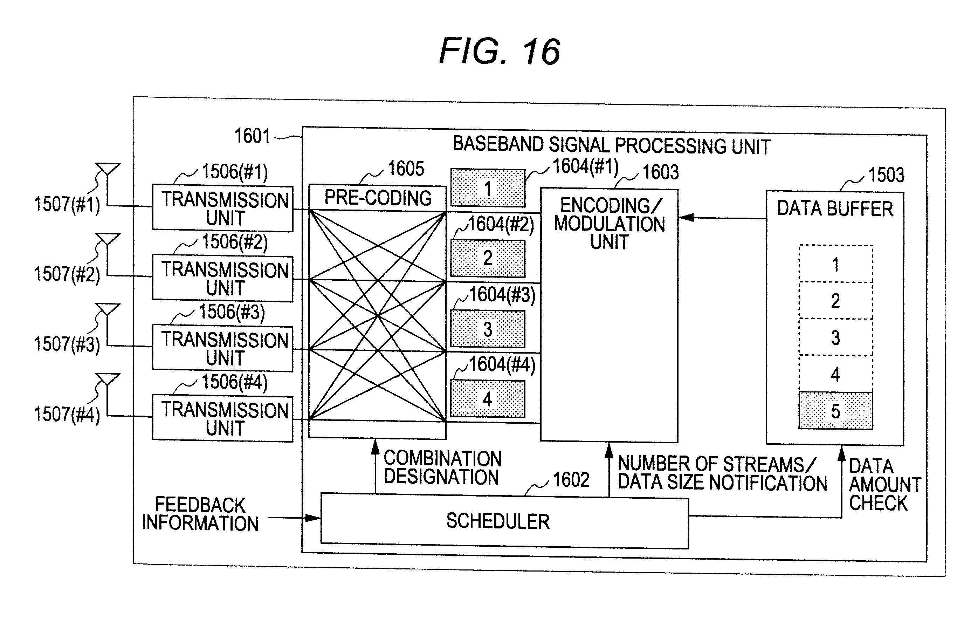

FIG. 16 is a diagram illustrating a configuration example of a closed loop MIMO transmission system of the space division multiplexing method in the 4-antenna configuration. What is different from the open loop method illustrated in FIG. 15 is that receiving quality for combinations of the antennas 1507 is measured on the receiving side (such as a mobile phone) and feedback of the combination that provides optimal quality is given. Also, a scheduler 1602 in a baseband signal processing unit 1601 on the transmitting side uses the feedback information to decide the combination of the antennas 1507 used for transmission. Further, the scheduler 1602 notifies an encoding/modulation unit 1603 of the number of streams actually output among baseband transmission signals 1604 #1 to #4. Following the notification, the encoding/modulation unit 1603 outputs only the used baseband transmission signals 1604. A pre-coding unit 1605 performs processing called pre-coding on the baseband transmission signals 1604 to output transmission output signals thereof from the necessary antennas 1507.

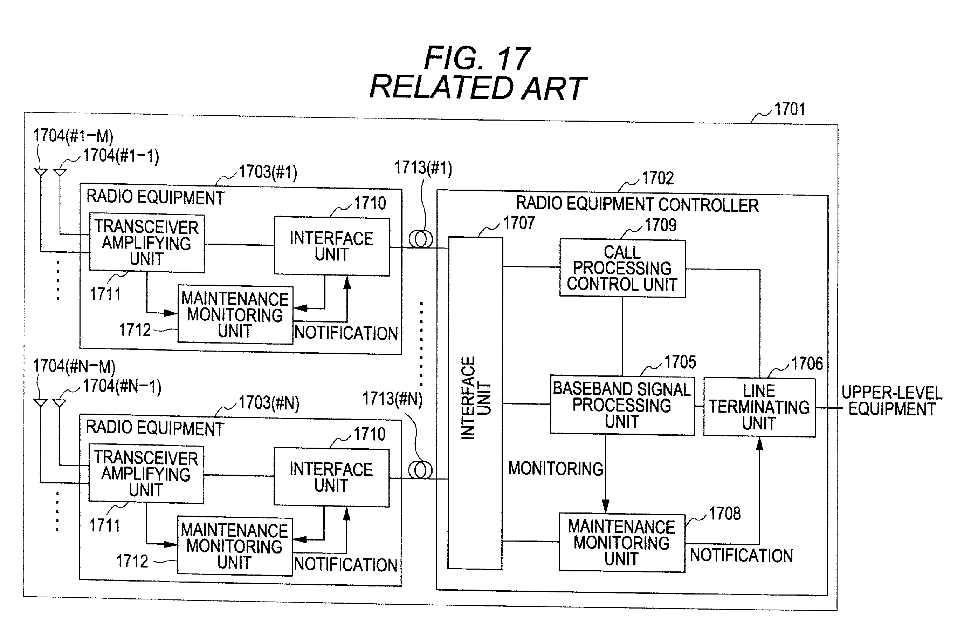

FIG. 17 is a diagram illustrating a configuration example of a conventional base transceiver station that performs MIMO communication.
A base transceiver station 1701 includes a radio equipment controller 1702, N modules #1 to #N of radio equipment 1703 connected thereto, and M antennas 1704 connected to each module of the radio equipment 1703.

In the radio equipment controller 1702, a line terminating unit 1706 terminates a network line to which upper-level equipment is connected and transmits/receives a communication signal to/from the upper-level equipment.
A baseband signal processing unit 1705 encodes and modulates a transmission signal transmitted from the line terminating unit 1706. The baseband signal processing unit 1705 sends out a baseband transmission signal obtained as a result to a digital interface 1713 constituted by optical fibers #1 to #N to which the modules #1 to #N of the radio equipment 1703 are connected via an interface unit 1707. The baseband signal processing unit 1705 also receives, via the interface unit 1707, a baseband transmission signal received from the modules #1 to #N of the radio equipment 1703 via the digital interface 1713 #1 to #N. The baseband signal processing unit 1705 decodes and demodulates a received signal and sends out a received signal obtained as a result to the line terminating unit 1706.

A call processing control unit 1709 controls signaling such as the start, update, and end of a call to a mobile station, such as a mobile phone, and, based on the signaling, instructs the baseband signal processing unit 1705 to start/end an operation or the like.

A maintenance monitoring unit 1708 monitors operating states of the baseband signal processing unit 1705 and the interface unit 1707. When a failure occurs, the maintenance monitoring unit 1708 notifies the upper-level equipment of failure information thereof via the line terminating unit 1706. The maintenance monitoring unit 1708 also notifies, via the line terminating unit 1706, the upper-level equipment of failure information from the modules #1 to #N of the radio equipment 1703 received via the interface unit 1707.

In the radio equipment 1703, an interface unit 1710 terminates a communication signal input/output via a digital interface 1713.
A transceiver amplifying unit 1711 amplifies a baseband transmission signal transmitted from the radio equipment controller 1702 via the digital interface 1713 and the interface unit 1710 in power and transmit the baseband transmission signal from the antennas 1704 #1 to #M. The transceiver amplifying unit 1711 also amplifies a received signal received by the antennas 1704 #1 to #M and sends the received signal to the radio equipment controller 1702 via the interface unit 1710 and the digital interface 1713.

A maintenance monitoring unit 1712 monitors states of the transceiver amplifying unit 1711 and the interface unit 1710. When a failure occurs, the maintenance monitoring unit 1712 notifies the radio equipment controller 1702 of failure information thereof from the interface unit 1710 via the digital interface 1713.

In the above configuration of the base transceiver station 1701, for example, an interface called CPRI (Common Public Radio Interface) is used as the digital interface 1713 #1 to #N connecting the modules #1 to #N of the radio equipment 1703 and the radio equipment controller 1702.

Assume that when the open loop MIMO transmission method by space division multiplexing is adopted as the communication method between a base transceiver station and a mobile station, the interface unit 1710 or the transceiver amplifying unit 1711 of the radio equipment 1703 fails. In this communication method, a plurality of modules of the radio equipment 1703 transmit different data from a plurality of the antennas 1704 regardless of feedback information. Thus, data transmitted from the failed antenna 1704 may not be decoded in the mobile station such as a mobile phone and an error occurs, leading to abnormal communication.

Assume that when the closed loop MIMO transmission method by space division multiplexing is adopted as the communication method between a base transceiver station and a mobile station, the interface unit 1710 or the transceiver amplifying unit 1711 of the radio equipment 1703 fails. In this communication method, feedback information from the mobile station is used to decide the combination of the antennas 1704 used for transmission. Thus, the antenna 1704 related to a failed portion is considered to be removed as a choice, but if the feedback time is long, abnormal communication may be caused after all.

When user multiplexing by the OFDM (Orthogonal Frequency Division Multiplexing) method is used, frequency resources (shared channel) are used by time division and it may take some users several seconds for feedback. The feedback time may further be prolonged due to a determination time of feedback information in a mobile station or an error of feedback information by an up receiving environment.

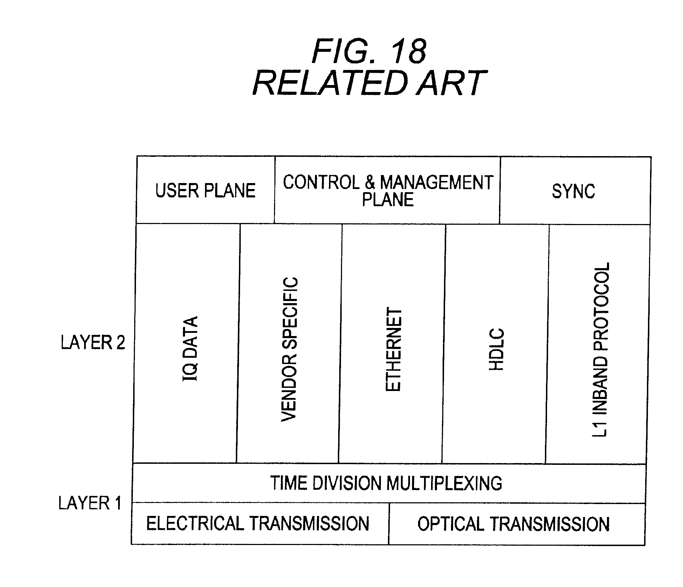

FIG. 18 is a schematic diagram of a CPRI protocol. The maintenance monitoring unit 1712 in the radio equipment 1703 can notify the maintenance monitoring unit 1708 in the radio equipment controller 1702 of failure conditions in the radio equipment 1703 using each field of Control&Management Plane, HDLC, Ethernet (registered trademark), Vendor Specific.

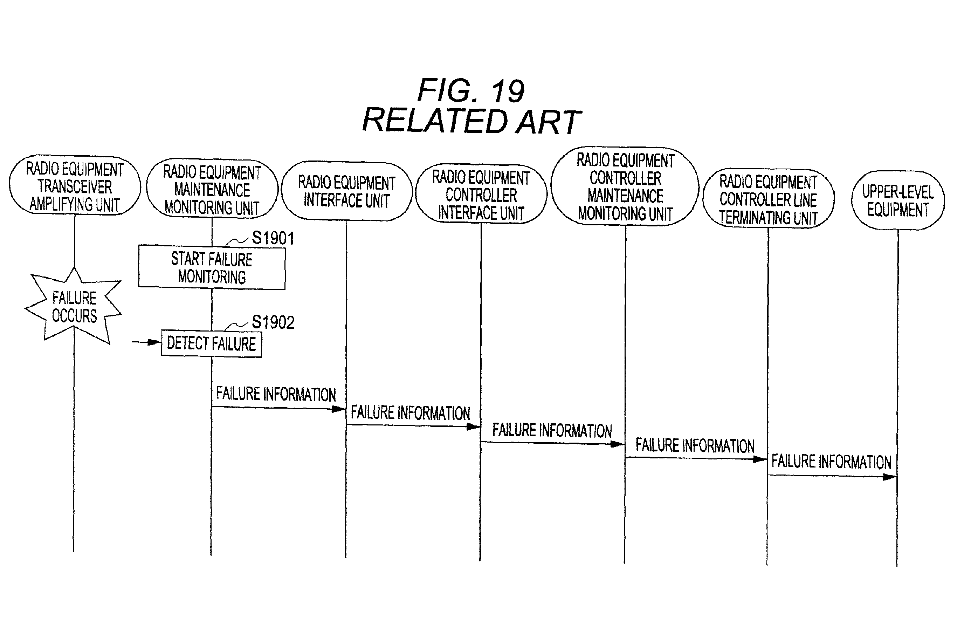

FIG. 19 is an operation sequence diagram illustrating an operation of conventional failure detection when the transceiver amplifying unit 1711 of the radio equipment 1703 fails. After starting fault monitoring (S1901), the maintenance monitoring unit 1712 in the radio equipment 1703 detects that the transceiver amplifying unit 1711 has failed (S1902). As a result, the maintenance monitoring unit 1712 transmits failure information. The failure information is received by the maintenance monitoring unit 1708 in the radio equipment controller 1702 via the interface unit 1710 in the radio equipment 1703, the digital interface 1713, and the interface unit 1707 in the radio equipment controller 1702. The maintenance monitoring unit 1708 in the radio equipment controller 1702 notifies the upper-level equipment of the failure information via the line terminating unit 1706 in the radio equipment controller 1702.

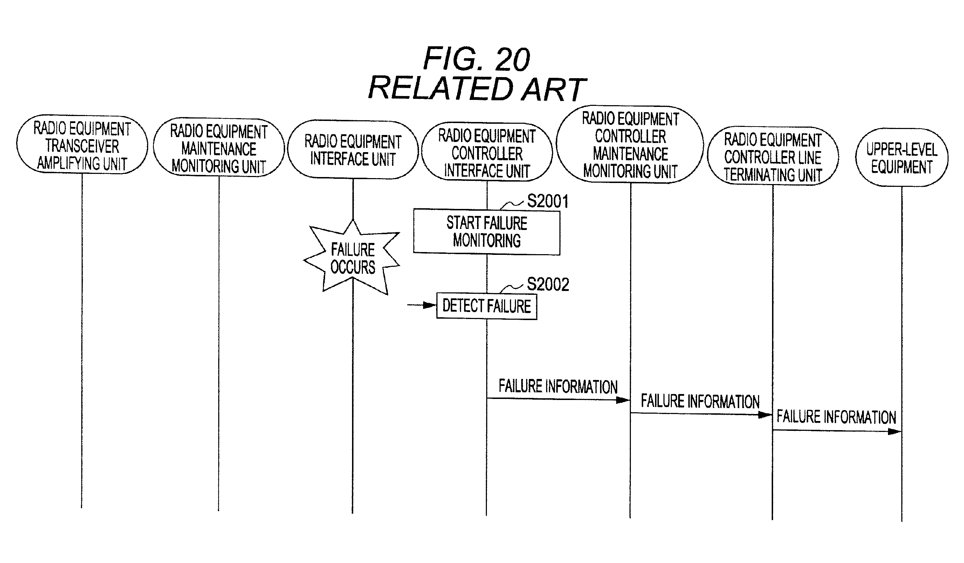

FIG. 20 is an operation sequence diagram illustrating the operation of conventional failure detection when the interface unit 1710 of the radio equipment 1703 fails. After starting fault monitoring (S2001), the interface unit 1707 in the radio equipment controller 1702 detects failure conditions of the interface unit 1710 by detecting that communication with the interface unit 1710 of the radio equipment 1703 has stopped (S2002). As a result, the interface unit 1707 sends out failure information to the maintenance monitoring unit 1708. The maintenance monitoring unit 1708 further notifies the upper-level equipment of the failure information via the line terminating unit 1706.

A collection operation of failure information illustrated in FIG. 19 and FIG. 20 is generally intended for notification from the radio equipment controller 1702 to the upper-level equipment. Since transmission data is not restricted or the antenna 1704 is not selected for transmission using the failure information, a state of abnormal communication will last even if a function unit related to some antenna 1704 has failed.

Thus, in the open loop MIMO transmission method by space division multiplexing, a failure of a data processing unit (such as a transceiver amplifying unit and interface unit) related to an antenna portion in radio equipment will lead to abnormal communication.

In the closed loop MIMO transmission method by space division multiplexing, when a data processing unit (such as a transceiver amplifying unit and interface unit) related to an antenna portion in radio equipment fails, communication will be restored by feedback information from a mobile station. However, abnormal communication continues before feedback is received.

It is desirable to avoid abnormal communication when radio equipment fails by swiftly limiting transmission to an antenna corresponding to a portion where a failure occurred.

### SUMMARY

According to embodiments of an aspect of the invention, a data transmission control method in a radio communication system with a mobile station having a plurality of antennas and a base transceiver station having a plurality of antennas, the data transmission control method includes detecting a failure of radio equipment connected to each of the plurality of antennas of the base transceiver station or to each of specified groups of antennas to perform radio communication processing for a connected antenna, and outputting failure information corresponding to the detected failure. The data transmission control method includes determining a failed antenna based on the failure information, and exercising control so that generation processing of transmission code words corresponding to the failed antenna is not performed.
The desirable features and advantages of the invention will be realized and attained by means of the elements and combinations particularly pointed out in the claims.
It is to be understood that both the foregoing general description and the following detailed description are exemplary and explanatory and are not restrictive of embodiments of the invention, as claimed.

### BRIEF DESCRIPTION OF DRAWINGS

Preferred features of the present invention will now be described, purely by way of example, with reference to the accompanying drawings, in which:-

FIG. 1 is a block diagram of an embodiment of a base transceiver station;
FIG. 2 is an operation sequence diagram illustrating an operation of failure detection when a transceiver amplifying unit of radio equipment fails;
FIG. 3 is a diagram illustrating an example of a data format of antenna failure information transmitted from the radio equipment;
FIG. 4 is a diagram illustrating the data format of equipment failure information;
FIG. 5 is a diagram illustrating a protocol stack of SNMP;
FIG. 6 is an operation sequence diagram illustrating the operation of failure detection when an interface unit of the radio equipment or a digital interface to which the interface unit is connected fails;
FIG. 7 is a diagram illustrating the data format of CPRI link failure information;
FIG. 8 is a diagram illustrating a configuration example of a baseband signal processing unit in an open loop MIMO transmission system by a space division multiplexing method based on the configuration of FIG. 1 in a 4-antenna configuration;
FIG. 9 is an operation flow chart of data size decision processing of a code word based on the equipment failure information in a scheduler in FIG. 8;
FIG. 10 is an operation flow chart of transmission control processing based on the data size of the code word in an encoding/modulation unit in FIG. 8;
FIG. 11 is a diagram illustrating a configuration example of the baseband signal processing unit in a closed loop MIMO transmission system by the space division multiplexing method based on the configuration of FIG. 1 in the 4-antenna configuration;
FIG. 12 is an operation flow chart of antenna combination decision processing for pre-coding based on the equipment failure information in the scheduler in FIG. 11;
FIG. 13 is an operation flow chart of data size decision processing of the code word based on the equipment failure information in the scheduler in FIG. 11;
FIG. 14 is an operation flow chart of transmission control processing based on the data size of the code word in the encoding/modulation unit in FIG. 11;
FIG. 15 is a diagram illustrating a configuration example of the open loop MIMO transmission system by the space division multiplexing method in the 4-antenna configuration;
FIG. 16 is a diagram illustrating a configuration example of the closed loop MIMO transmission system by the space division multiplexing method in the 4-antenna configuration;
FIG. 17 is a diagram illustrating a configuration example of a conventional base transceiver station that performs MIMO communication;
FIG. 18 is a schematic diagram of a CPRI protocol;
FIG. 19 is an operation sequence diagram illustrating an operation of conventional failure detection when the transceiver amplifying unit of the radio equipment fails; and
FIG. 20 is an operation sequence diagram illustrating the operation of conventional failure detection when the interface unit of the radio equipment fails.

### DESCRIPTION OF EMBODIMENTS

A first aspect shown below may be premised on a base transceiver station (101) that performs radio communication by the multiple input multiple output (MIMO) radio communication method using a plurality of antennas set up in a mobile station and a plurality of antennas (1704) set up in the local station.

Maintenance monitoring units (104, 106) detect a failure of a plurality of pieces of radio equipment (103) connected to each of the plurality of antennas set up in the local station or to each of specified groups of antennas to perform radio communication processing for a connected antenna and output failure information (201, 202, 601, and 602) corresponding to the detected failure.

A baseband signal processing unit (105) determines a failed antenna based on the failure information when a baseband signal is processed and exercises control so that generation processing of transmission code words corresponding to the failed antenna will not be performed.

A second aspect shown below may be premised on a base transceiver station (101) that performs radio communication by the multiple input multiple output (MIMO) radio communication method using a plurality of antennas set up in a mobile station and a plurality of antennas (1704) set up in the local station and includes a plurality of pieces of radio equipment (103) connected to each of the plurality of antennas set up in the local station or to each of specified groups of antennas to perform radio communication processing for a connected antenna and a radio equipment controller (102) connected to the plurality of pieces of radio equipment via individual digital interfaces (1713, CPRI) to perform baseband signal processing of a communication signal.

A first maintenance monitoring unit (106) in each piece of radio equipment detects a failure of the radio equipment thereof and outputs first failure information (201) corresponding to the detected failure to the digital interface to which the radio equipment is connected.

A second maintenance monitoring unit (104) in the radio equipment controller collects the first failure information of each piece of radio equipment from each digital interface and outputs second failure information (202) obtained by summarizing each piece of the first failure information.

A baseband signal processing unit (105) in the radio equipment controller determines a failed antenna based on the second failure information when a baseband signal is processed and exercises control so that generation processing of transmission code words corresponding to the failed antenna will not be performed.

A third aspect shown below may be premised on a base transceiver station (101) that performs radio communication by the multiple input multiple output (MIMO) radio communication method using a plurality of antennas set up in a mobile station and a plurality of antennas (1704) set up in the local station while controlling a combination of antennas based on feedback information from the mobile station.

Maintenance monitoring units (104, 106) detect a failure of a plurality of pieces of radio equipment connected to each of the plurality of antennas set up in the local station or to each of specified groups of antennas to perform radio communication processing for a connected antenna and output failure information corresponding to the detected failure.

A baseband signal processing unit (105) determines a failed antenna based on the failure information when a baseband signal is processed and, if the failed antenna is contained in antennas specified by the feedback information, exercises control so that generation processing of transmission code words is performed in a combination of antennas that does not contain the failed antenna.

A fourth aspect shown below may be premised on a base transceiver station (101) that performs radio communication by the multiple input multiple output (MIMO) radio communication method using a plurality of antennas set up in a mobile station and a plurality of antennas (1704) set up in the local station while controlling a combination of antennas based on feedback information from the mobile station and includes a plurality of pieces of radio equipment (103) connected to each of the plurality of antennas set up in the local station or to each of specified groups of antennas to perform radio communication processing for a connected antenna and a radio equipment controller (102) connected to the plurality of pieces of radio equipment via individual digital interfaces (1713, CPRI) to perform baseband signal processing of a communication signal.

A first maintenance monitoring unit (106) in each piece of radio equipment detects a failure of the radio equipment thereof and outputs first failure information corresponding to the detected failure to the digital interface to which the radio equipment is connected.

A second maintenance monitoring unit (104) in the radio equipment controller collects the first failure information of each piece of radio equipment from each digital interface and outputs second failure information obtained by summarizing each piece of the first failure information.

A baseband signal processing unit (105) in the radio equipment controller determines a failed antenna based on the second failure information when a baseband signal is processed and, if the failed antenna is contained in antennas specified by the feedback information, exercises control so that generation processing of transmission code words is performed in a combination of antennas that does not contain the failed antenna.

In the above third and fourth aspects, if the number of streams that can be transmitted deceases due to a combination of antennas, the baseband signal processing unit may be configured to adjust the amount of data in generation processing of transmission code words.

The above second and fourth aspects may be configured to further include an interface failure detection unit (1707) that detects a failure of each digital interface and outputs third failure information (601) corresponding thereto in the radio equipment controller so that the second maintenance monitoring unit outputs the second failure information (202, 602) obtained by summarizing each piece of the first failure information (201) and the third failure information.

In the above first to fourth aspects, the baseband signal processing unit may be configured to set the data size of transmission code word of antennas for which no transmission code word is generated to zero (S904 and S1304).

An embodiment will be described below in detail with reference to drawings.

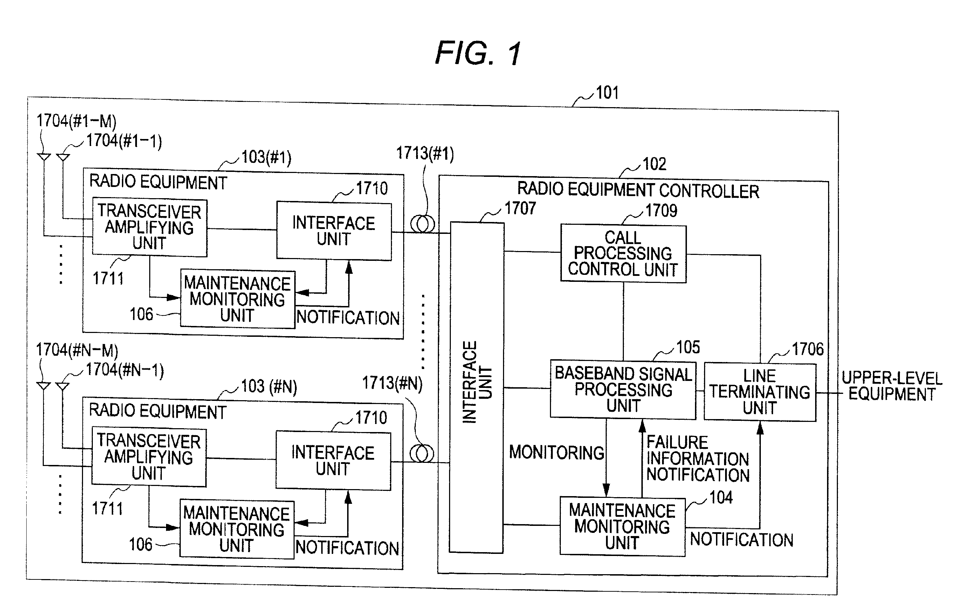

FIG. 1 is a block diagram of an embodiment of a base transceiver station.
In the configuration of the base transceiver station illustrated in FIG. 1, components to which the same reference numeral is attached as those in the configuration of a base transceiver station illustrated in FIG. 17 perform substantially the same processing as in FIG. 17.

Differences between the configuration in FIG. 1 and that in FIG. 17 lie in the maintenance monitoring units 104 and 106 and the baseband signal processing unit 105. Also, reference numerals of the radio equipment controller 102, the radio equipment 103, and the base transceiver station 101 containing these components are changed.

The maintenance monitoring unit 104 collects not only failure information of the radio equipment 103 1# to #N, but also failure conditions of the radio equipment controller 102 itself.
In FIG. 1, the transceiver amplifying unit 1711 of the radio equipment 103 is configured as a block, but may be configured as an independent block for each of the antennas 1704. Also, the interface unit 1707 in the radio equipment controller 102 is configured as a block, but may be configured as an independent block for each of the digital interfaces 1713.

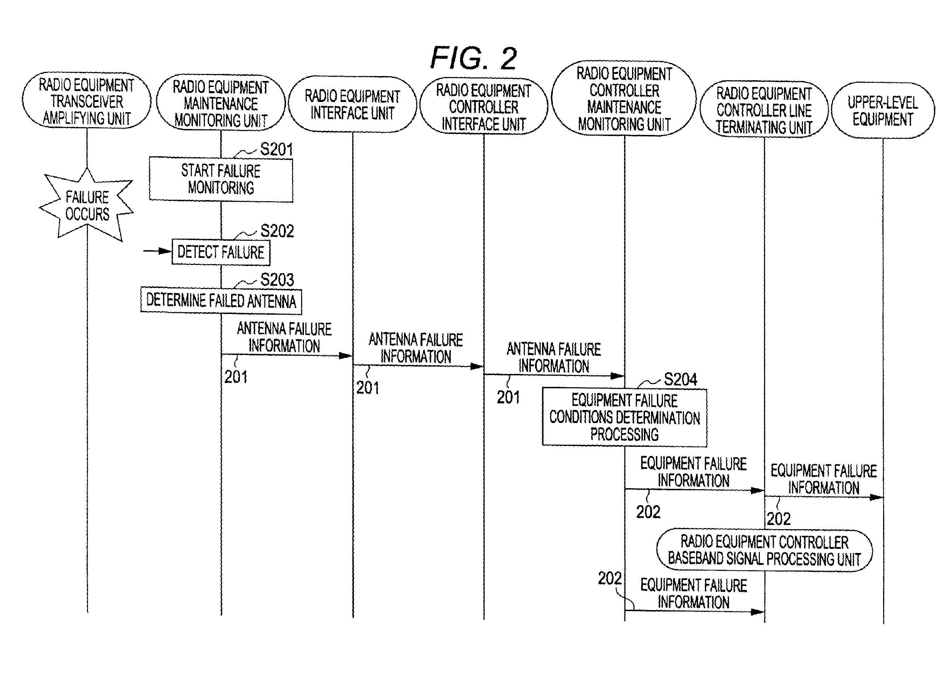

FIG. 2 is an operation sequence diagram illustrating an operation of failure detection when the transceiver amplifying unit 1711 of the radio equipment 103 fails.
After starting fault monitoring (S201), the maintenance monitoring unit 106 in the radio equipment 103 detects that the transceiver amplifying unit 1711 has failed (S202). In this case, the maintenance monitoring unit 106 determines for which antenna of the antennas 1711 #1 to #M the failed transceiver amplifying unit 1711 is intended (S203). The maintenance monitoring unit 106 sends out antenna failure information 201 based on a determination result thereof.

The antenna failure information 201 is received by the maintenance monitoring unit 104 in the radio equipment controller 102 via the interface unit 1710 in the radio equipment 103, the digital interfaces 1713, and the interface unit 1707 in the radio equipment controller 102.

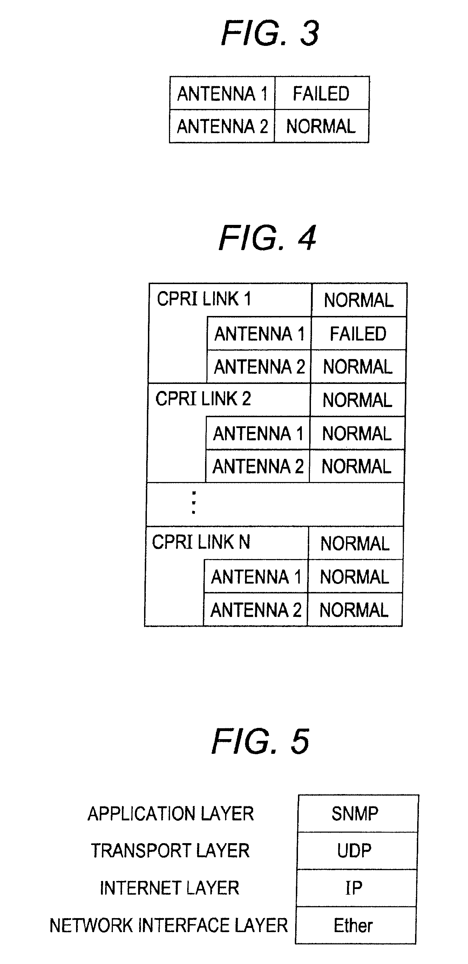

FIG. 3 is a diagram illustrating an example of the data format of the antenna failure information 201 transmitted from the radio equipment 103. This data format example is an example in which the radio equipment 103 has the two antennas 1704 #1 and #2 (=#M).

After receiving the antenna failure information 201 from the radio equipment 103, the maintenance monitoring unit 104 in the radio equipment controller 102 creates equipment failure information 202 (FIG. 2) of the base transceiver station 101 from the notified antenna failure information 201 of the radio equipment 103 and failure conditions of the plurality of pieces of radio equipment 103 connected under the radio equipment controller 102 (S204 in FIG. 2). The maintenance monitoring unit 104 notifies the baseband signal processing unit 105 of the equipment failure information 202.

FIG. 4 is a diagram illustrating the data format of the equipment failure information 202. This data format example is also an example in which the radio equipment 103 has the two antennas 1704 #1 and #2 (=#M).

In FIG. 2, the maintenance monitoring unit 104 in the radio equipment controller 102 further notifies the upper-level equipment of the equipment failure information 202 via the line terminating unit 1706 in the radio equipment controller 102.

If the base transceiver station 101 and the upper-level equipment are connected by an IP network, a notification to the upper-level equipment can be made, for example, by using SNMP (Simple Network Management Protocol). FIG. 5 is a diagram illustrating a protocol stack of SNMP. In SNMP, a notification of state as management information called MIB (Management Information Base) can be made and, by defining the equipment failure information 202 of the base transceiver station 101 as an individual MIB like one illustrated in FIG. 4, a notification of failure conditions of the base transceiver station 101 can be made. Accordingly, it becomes possible for the upper-level equipment to recognize antenna failure conditions of the base transceiver station 101.

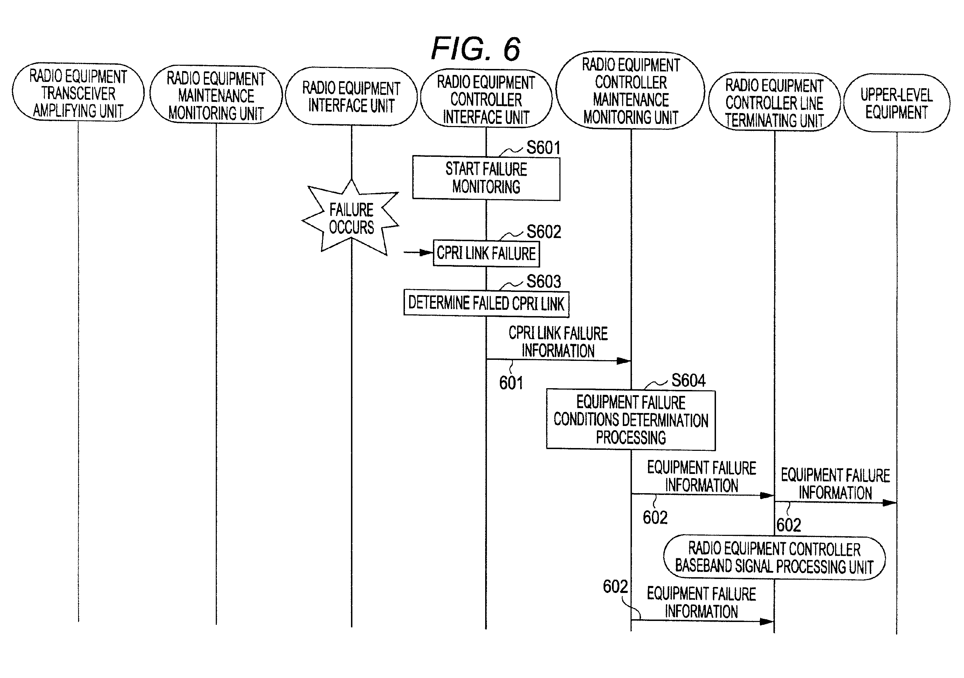

FIG. 6 is an operation sequence diagram illustrating the operation of failure detection when the interface unit 1710 of the radio equipment 103 or the digital interface 1713 to which the interface unit 1710 is connected fails. After starting fault monitoring (S601), the interface unit 1707 in the radio equipment controller 102 detects a failure of the interface unit 1710 of the radio equipment 103 or the digital interface 1713 connected thereto by detecting an abnormal state of synchronization of a CPRI link (S602). Based on the detection result, the interface unit 1707 determines which of CPRI links of the digital interfaces 1713 #1 to #N has failed (S603). The interface unit 1707 creates CPRI link failure information 601 and notifies the maintenance monitoring unit 104 of the CPRI link failure information 601.

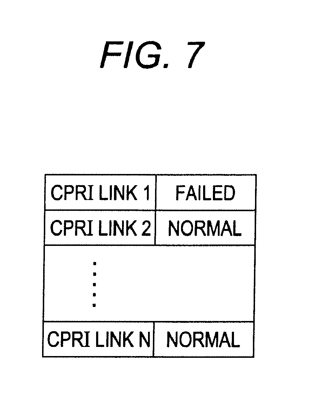

FIG. 7 is a diagram illustrating the data format of the CPRI link failure information 601.
After receiving the CPRI link failure information 601 from the radio equipment 103, the maintenance monitoring unit 104 in the radio equipment controller 102 creates equipment failure information 602 (FIG. 6) of the base transceiver station 101 from the notified CPRI link failure information 601 of the radio equipment 103 and failure conditions of the plurality of CPRI links connected under the radio equipment controller 102 (S604 in FIG. 6). The maintenance monitoring unit 104 notifies the baseband signal processing unit 105 of the equipment failure information 602.

In FIG. 6, the maintenance monitoring unit 104 in the radio equipment controller 102 further notifies the upper-level equipment of the equipment failure information 602 via the line terminating unit 1706 in the radio equipment controller 102.

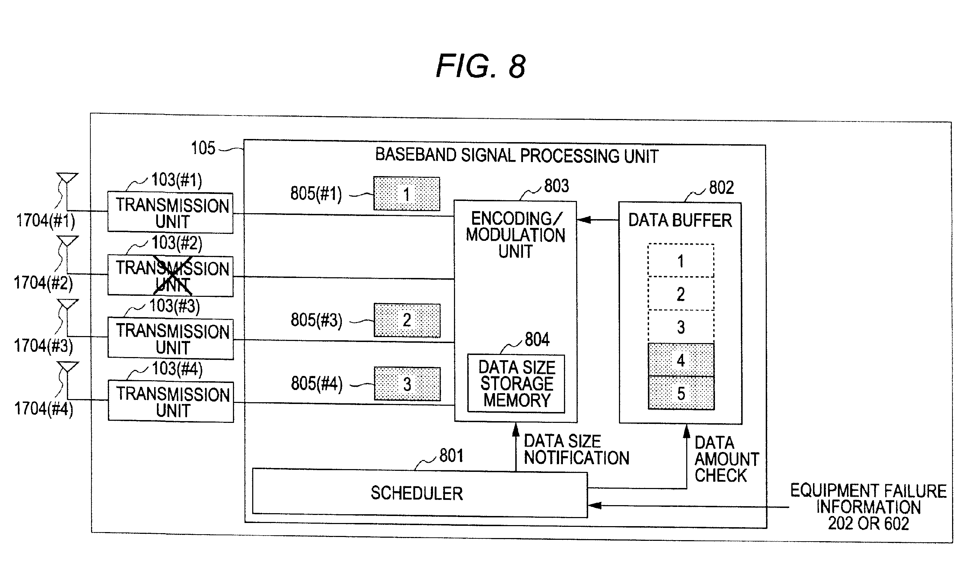

FIG. 8 is a diagram illustrating a configuration example of the baseband signal processing unit 105 in an open loop MIMO transmission system by the space division multiplexing method based on the configuration of FIG. 1 in the 4-antenna configuration. In FIG. 8, a case in which each transmission unit 103 corresponding to the radio equipment 103 in FIG. 1 has one antenna 1704 is illustrated for the sake of simplicity. As illustrated in FIG. 1, the basic operation when the transmission unit 103 has a plurality of antennas 1704 is substantially the same.

A scheduler 801 checks the amount of data stored in a data buffer 802 and notifies an encoding/modulation unit 803 of the data size in accordance with the amount of accumulated data.
The encoding/modulation unit 803 draws up data from the data buffer 802 in accordance with the notified data size to perform encoding and modulation processing by space division. As a result, baseband transmission signals 805 divided into four spaces #1 to #4 are output from the encoding/modulation unit 803.

Each of these baseband transmission signals 805 #1 to #4 is amplified in power by each transmission unit 103 #1 to #4 corresponding to the radio equipment 103 in FIG. 1 before being transmitted from each of the antennas 1704 #1 to #4.

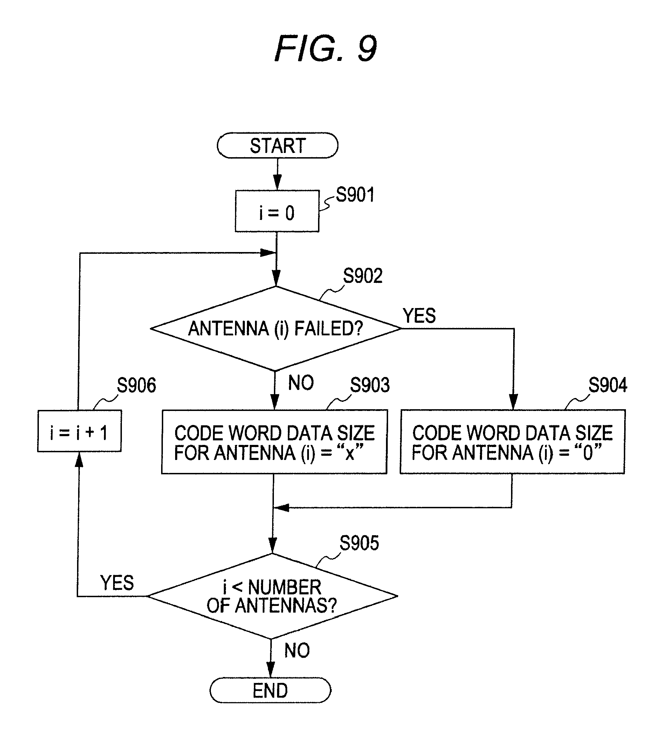

At this point, the scheduler 801 analyzes the equipment failure information 202 (FIG. 2) or 602 (FIG. 6) received from the maintenance monitoring unit 104 in FIG. 1 according to the operation flow chart illustrated in FIG. 9. Based on an analysis result, the scheduler 801 determines (step S902) whether an antenna has failed from the antenna number i=0 (step S901) to i=the number of antennas (step S905) sequentially (step S906). If the i-th antenna 1704 has no antenna failure, the scheduler 801 makes a notification of the size ("x" in FIG. 9) checked in the data buffer 802 as the data size of code word for the i-th antenna 1704 (step S902 -> step S903). If the i-th antenna 1704 has an antenna failure, the scheduler 801 makes a notification of "0" as the data size of code word for the i-th antenna 1704 (step S902 -> step S904).

When the equipment failure information 602 (FIG. 6) is analyzed, the antenna 1704 housed in the radio equipment 103 (FIG. 1) connected to the digital interface 1713 of a CPRI link (See FIG. 7) where an error occurred is extracted from a correspondence table between links and antennas (not illustrated) to determine the antenna 1704 where a failure occurred.

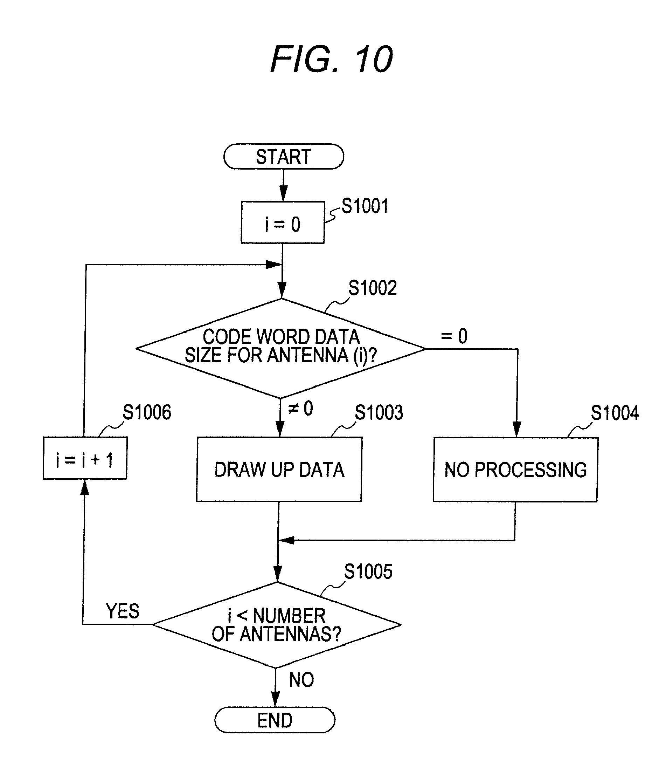

The data size notified from the scheduler 801 is stored in a storage area for each antenna i of a data size storage memory 804 in the encoding/modulation unit 803. The encoding/modulation unit 803 determines the data size of code word from the antenna number i=0 (step S1001) to i=the number of antennas (step S1005) sequentially (step S1006) according to the operation flow chart illustrated in FIG. 10 when encoding/modulation processing is performed. If the data size of code word corresponding to the i-th antenna 1704 stored in the data size storage memory 804 is not "0", the encoding/modulation unit 803 draws up data of the data size specified by the data size of the code word from the data buffer 802, performs encoding/modulation processing, and sends out the transmission signal 805 (#i) obtained as a result thereof to the transmission unit 103 (#i) to which the i-th antenna 1704 belongs (step S1002 -> step S1003). If, on the other hand, the data size of code word corresponding to the i-th antenna 1704 stored in the data size storage memory 804 is "0", the encoding/modulation unit 803 performs no transmission processing for the i-th antenna 1704 (step S1002 -> step S1004).

In the example in FIG. 8, a case in which the transmission unit (radio equipment) 103 to which the antenna 1704 #2 belongs has failed is illustrated. In this example, while the four transmission signals 805 #1 to #4 should originally be sent out, the three transmission signals 805 #1, #3, and #4 are sent out.

Thus, if radio equipment fails in an open loop MIMO transmission system by the space division multiplexing method, wasteful transmission of valid data can be avoided. If a notification of the equipment failure information 202 or 602 is received from the maintenance monitoring unit 104, the baseband signal processing unit 105 can immediately avoid transmission of valid data toward the antenna 1704 belonging to the radio equipment 103 (FIG. 1) that has failed based on the data size of code word for each of the antennas 1704 stored in the data size storage memory 804 after being notified of the equipment failure information 202 or 602 from the maintenance monitoring unit 104 without waiting for instructions from the upper-level equipment. Accordingly, though throughput deteriorates, abnormal communication can be prevented.

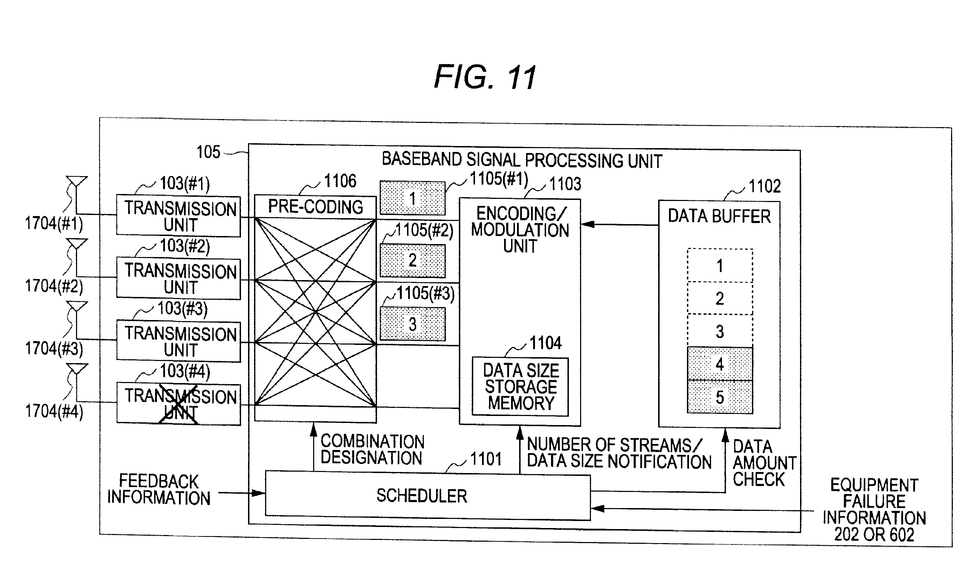

FIG. 11 is a diagram illustrating a configuration example of the baseband signal processing unit 105 in a closed loop MIMO transmission system by the space division multiplexing method based on the configuration of FIG. 1 in the 4-antenna configuration. In FIG. 11, a case in which each transmission unit 103 corresponding to the radio equipment 103 in FIG. 1 has one antenna 1704 is illustrated for the sake of simplicity. As illustrated in FIG. 1, the basic operation when the transmission unit 103 has a plurality of antennas 1704 is substantially the same.

A scheduler 1101 determines the size of data that can be transmitted based on feedback information from a mobile station. The scheduler 1101 checks the amount of data stored in a data buffer 1102 and calculates the size of data to be transmitted based on the number of code words and data size obtained from the feedback information and the amount of data accumulated in the data buffer 1102.
The scheduler 1101 notifies an encoding/modulation unit 1103 of the calculated data size.

The encoding/modulation unit 1103 draws up data from the data buffer 1102 in accordance with the notified data size to perform encoding and modulation processing by space division. As a result, baseband transmission signals 1105 divided into four spaces #1 to #4 are output from the encoding/modulation unit 1103.

The scheduler 1101 also decides the combination for each of the antennas 1704 for pre-coding processing based on feedback information and notifies a pre-coding unit 1106 of the combination. The pre-coding unit 1106 uses the received combination information to perform pre-coding processing on the baseband transmission signals 1105. The pre-coding unit 1106 outputs each transmission output signal obtained as a result of performing pre-coding processing to each of the antennas 1704 via each of the transmission units 103 (the radio equipment in FIG. 1).

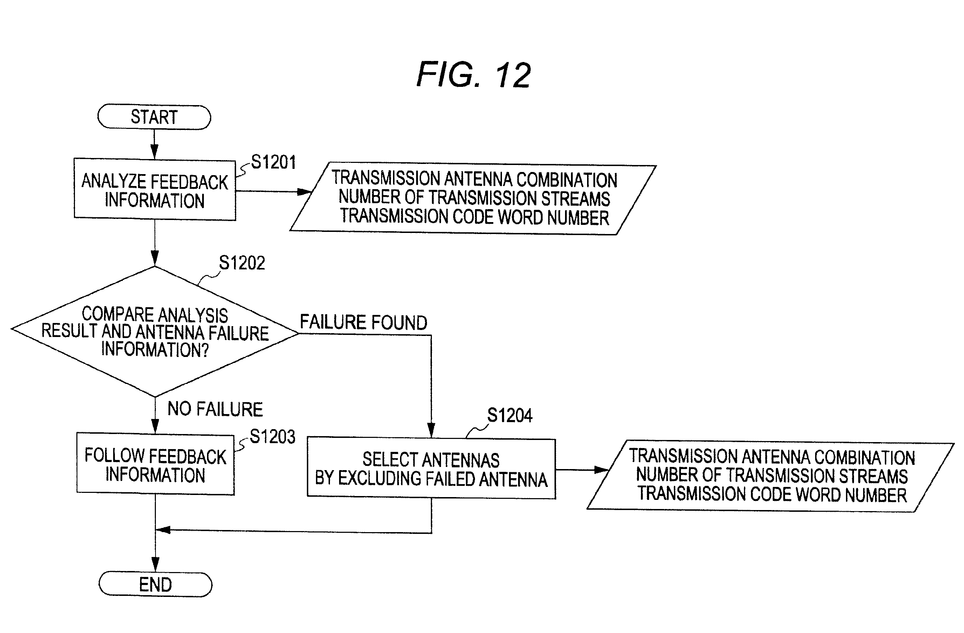

At this point, the scheduler 1101 analyzes the equipment failure information 202 (FIG. 2) or 602 (FIG. 6) received from the maintenance monitoring unit 104 (FIG. 1) according to the operation flow chart illustrated in FIG. 12 (step S1201). If, when the combination of the antennas 1704 is determined from feedback information, there is no antenna failure or the feedback information contains no failed antenna 1704, the scheduler 1101 notifies the pre-coding unit 1106 of the combination of the antennas 1704 according to the feedback information (step S1202 -> step S1203). If the feedback information contains the failed antenna 1704, the scheduler 1101 notifies the pre-coding unit 1106 of a combination that does not contain the failed antenna (step S1202 -> step S1204). If the number of streams that can be transmitted decreases after execution of step S1204, the scheduler 1101 internally sets "not ready for transmission" to transmission code word numbers that become not ready for transmission with a decreasing number of streams.

When the equipment failure information 602 (FIG. 6) is analyzed, the antenna 1704 housed in the radio equipment 103 (FIG. 1) connected to the digital interface 1713 of a CPRI link (See FIG. 7) where an error occurred is extracted from a correspondence table between links and antennas (not illustrated) to determine the antenna 1704 where a failure occurred.

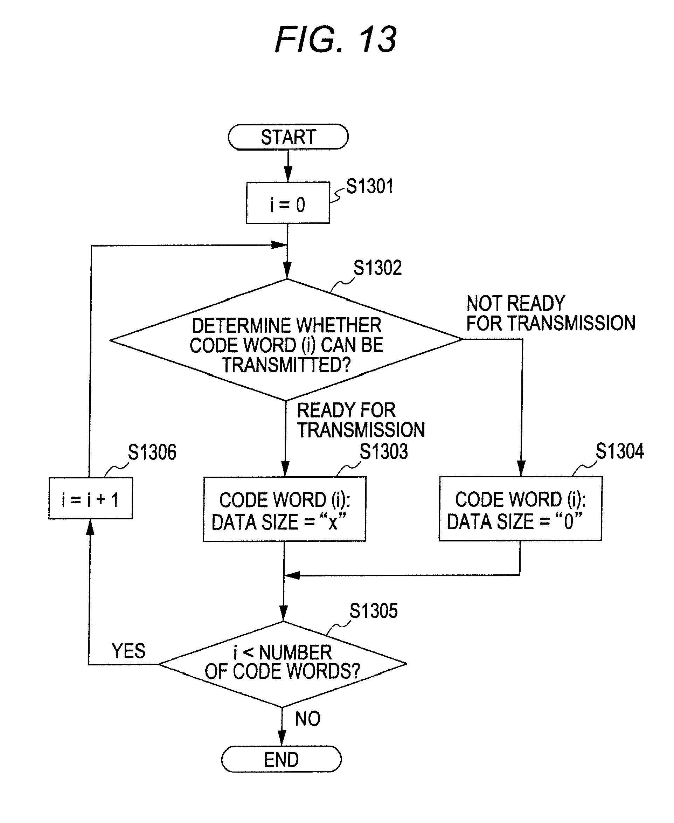

At this point, the scheduler 1101 determines whether code words can be transmitted to the i-th antenna 1704 from the antenna number i=0 (step S1301) to i=the number of antennas (step S1305) sequentially (step S1306) according to the operation flow chart illustrated in FIG. 13 (step S1302). If the number of transmission streams decreases after the combination of the antennas 1704 being changed by processing at step S1204 in FIG. 12 described above and the code word number has "not ready for transmission" set accordingly thereto (Refer to the explanation of step S1204 in FIG. 12), the scheduler 1101 determines that codes words for the i-th antenna 1704 are not ready for transmission. Then, the scheduler 1101 makes a notification of "0" as the data size of code word for the i-th antenna 1704 (step S1302 -> step S1304). Otherwise, the scheduler 1101 makes a notification of the calculated size ("x" in FIG. 13) as the data size of code word for the i-th antenna 1704 (step S1302 -> step S1303).

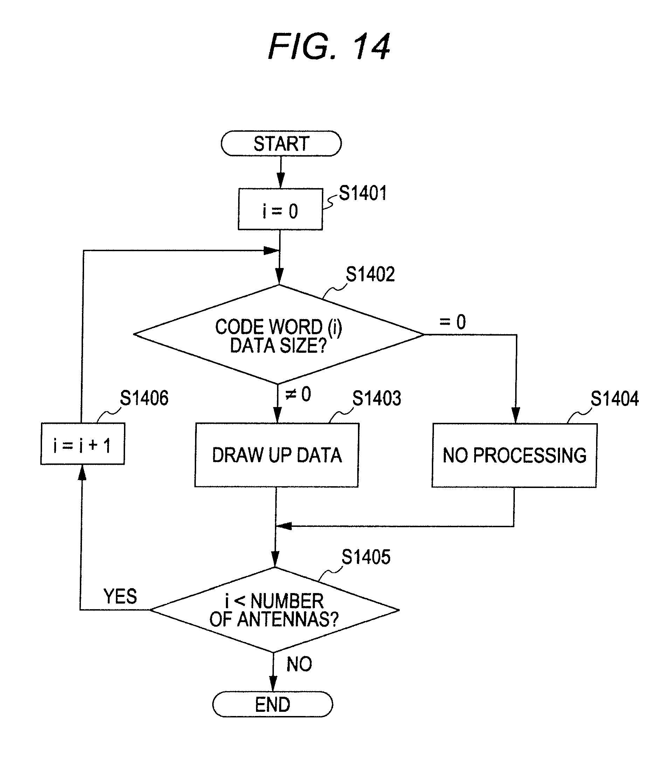

The data size notified from the scheduler 1101 is stored in a storage area for each antenna i of a data size storage memory 1104 in the encoding/modulation unit 1103. The encoding/modulation unit 1103 determines the data size of code word from the antenna number i=0 (step S1401) to i=the number of antennas (step S1405) sequentially (step S1406) according to the operation flow chart illustrated in FIG. 14 when encoding/modulation processing is performed. If the data size of code word corresponding to the i-th antenna 1704 stored in the data size storage memory 1104 is not "0", the encoding/modulation unit 1103 draws up data of the data size specified by the data size of the code word from the data buffer 1102, performs encoding/modulation processing, and sends out the transmission signal 1105 (#i) obtained as a result thereof to the transmission unit 103 (#i) to which the i-th antenna 1704 belongs (step S1402 -> step S1403). If, on the other hand, the data size of code word corresponding to the i-th antenna 1704 stored in the data size storage memory 1104 is "0", the encoding/modulation unit 1103 performs no transmission processing for the i-th antenna 1704 (step S1402 -> step S1404).

In the example in FIG. 11, a case in which the transmission unit (radio equipment) 103 to which the antenna 1704 #4 belongs has failed is illustrated and thus, the fourth stream becomes not ready for transmission. Accordingly, three baseband transmission signals 1105 #1 to #3 are transmitted after a transmission state of three code words being set.

Thus, if radio equipment fails in a closed loop MIMO transmission system by the space division multiplexing method, wasteful transmission of valid data can also be avoided. If a notification of the equipment failure information 202 or 602 is received from the maintenance monitoring unit 104, the baseband signal processing unit 105 can immediately avoid transmission of valid data toward the antenna 1704 belonging to the radio equipment 103 (FIG. 1) that has failed based on the data size of code word for each of the antennas 1704 stored in the data size storage memory 804 after being notified of the equipment failure information 202 or 602 from the maintenance monitoring unit 104 without waiting for instructions from the upper-level equipment. Accordingly, though throughput deteriorates, abnormal communication can be prevented.

In open loop MIMO communication by the space division multiplexing method, as described above, abnormal communication due to an antenna failure can be prevented without waiting for instructions from the upper-level equipment.
In closed loop MIMO communication by the space division multiplexing method, call continuation can be ensured by minimizing a period of communication stop due to an antenna failure without waiting for instructions from the upper-level equipment.

All examples and conditional language recited herein are intended for pedagogical purposes to aid the reader in understanding the principles of the invention and the concepts contributed by the inventor to furthering the art, and are to be construed as being without limitation to such specifically recited examples and conditions, nor does the organization of such examples in the specification relate to a showing of the superiority and inferiority of embodiments of the invention. Although the embodiment(s) of the present inventions have been described in detail, it should be understood that the various changes, substitutions, and alterations could be made hereto without departing from the scope of the invention.

In any of the above aspects, the various features may be implemented in hardware, or as software modules running on one or more processors. Features of one aspect may be applied to any of the other aspects.

The invention also provides a computer program or a computer program product for carrying out any of the methods described herein, and a computer readable medium having stored thereon a program for carrying out any of the methods described herein. A computer program embodying the invention may be stored on a computer-readable medium, or it could, for example, be in the form of a signal such as a downloadable data signal provided from an Internet website, or it could be in any other form.

## Claims

1. A data transmission control method in a radio communication system with a mobile station having a plurality of mobile antennas and a base transceiver station having a plurality of base antennas, the data transmission control method comprising:
detecting a failure of radio equipment connected to each of the plurality of base antennas of the base transceiver station or to each of specified groups of the plurality of base antennas to perform radio communication processing for a connected one of the plurality of base antennas;
outputting failure information corresponding to the detected failure;
determining a failed antenna based on the failure information; and
exercising control so that generation processing of transmission code words corresponding to the failed antenna is not performed.

2. A data transmission control method in a radio communication system with a mobile station having a plurality of mobile antennas and a base transceiver station having a plurality of base antennas, the base transceiver station including a plurality of pieces of radio equipment that perform radio communication processing for the base antennas connected to local equipment and a radio equipment controller connected to the plurality of pieces of radio equipment via individual digital interfaces to perform baseband signal processing of a communication signal, the data transmission control method comprising:
detecting a failure of local radio equipment and outputting first failure information corresponding to the detected failure to the digital interface to which the local radio equipment is connected in each piece of radio equipment;
determining, by the radio equipment controller, a failed antenna based on second failure information obtained by collecting the first failure information of each piece of the radio equipment from the digital interface and summarizing the first failure information; and
exercising, by the radio equipment controller, control so that generation processing of transmission code words corresponding to the failed antenna is not performed.

3. A data transmission control method in a radio communication system with a mobile station having a plurality of mobile antennas and a base transceiver station having a plurality of base antennas, the data transmission control method comprising:
detecting a failure of radio equipment connected to each of the base antennas of the base transceiver station or each of specified groups of the base antennas to perform radio communication processing for a connected one of the base antennas;
outputting failure information corresponding to the detected failure;
determining a failed antenna based on the failure information; and
exercising control so that, when the failed antenna is contained in antennas specified by information from the mobile station, generation processing of transmission code words is performed by a combination of antennas that does not contain the failed antenna.

4. A data transmission control method in a radio communication system with a mobile station having a plurality of mobile antennas and a base transceiver station having a plurality of base antennas, the base transceiver station including a plurality of pieces of radio equipment that perform radio communication processing for the base antennas connected to local equipment and a radio equipment controller connected to the plurality of pieces of radio equipment via individual digital interfaces to perform baseband signal processing of a communication signal, the data transmission control method comprising:
detecting a failure of local radio equipment and outputting first failure information corresponding to the detected failure to the digital interface to which the local radio equipment is connected in each piece of radio equipment; and
in the radio equipment controller,
determining a failed antenna based on second failure information obtained by collecting the first failure information of each piece of the radio equipment from the digital interface and summarizing the first failure information; and
exercising control so that, when the failed antenna is contained in antennas specified by information from the mobile station, generation processing of transmission code words is performed by a combination of antennas that does not contain the failed antenna.

5. The data transmission control method according to claim 3 or 4, wherein
when streams that can be transmitted decrease by the combination of antennas, an amount of data in generation processing of the transmission code words is adjusted.

6. The data transmission control method according to any of claims 2, 4 and 5, wherein
the radio equipment controller detects the failure of each of the digital interfaces and outputs the second failure information by summarizing third failure information corresponding thereto and each of the first failure information.

7. The data transmission control method according to any of claims 1 to 6, wherein
a data size of the transmission code words is set to zero for antennas for which no generation processing of the transmission code words is performed.

8. A base transceiver station that performs radio communication with a mobile station having a plurality of mobile antennas using a plurality of base antennas, the base transceiver station comprising:
radio equipment connected to each of the plurality of base antennas set up in local equipment or each of predetermined groups of the plurality of base antennas to perform radio communication processing for a connected one of the plurality of base antennas;
a maintenance monitoring unit that detects a failure of the radio equipment and outputs failure information corresponding to the detected failure; and
a baseband signal processing unit that determines a failed antenna based on the failure information and exercises control so that generation processing of transmission code words corresponding to the failed antenna is not performed.

9. A base transceiver station that performs radio communication with a mobile station having a plurality of mobile antennas using a plurality of base antennas, the base transceiver station comprising:
radio equipment connected to each of the plurality of base antennas set up in local equipment or each of predetermined groups of the plurality of base antennas to perform radio communication processing for a connected one of the plurality of base antennas; and
a radio equipment controller connected to the plurality of pieces of radio equipment via individual digital interfaces to perform baseband signal processing of a communication signal, wherein
the radio equipment include a first maintenance monitoring unit that detects a failure of the radio equipment and outputs first failure information corresponding to the detected failure to the digital interface to which the radio equipment is connected in each piece of radio equipment, and
the radio equipment controller includes:
a second maintenance monitoring unit that outputs second failure information obtained by collecting the first failure information of each piece of the radio equipment from each of the digital interfaces and summarizing the first failure information; and
a baseband signal processing unit that determines a failed antenna based on the second failure information and exercises control so that generation processing of transmission code words corresponding to the failed antenna is not performed.

10. A base transceiver station that performs radio communication with a mobile station having a plurality of mobile antennas using a plurality of base antennas, the base transceiver station comprising:
a maintenance monitoring unit that detects a failure of radio equipment connected to each of the plurality of base antennas set up in local equipment or each of predetermined groups of the plurality of base antennas to perform radio communication processing for a connected one of the plurality of base antennas and outputs failure information corresponding to the detected failure; and
a baseband signal processing unit that determines a failed antenna based on the failure information and exercises control so that, when the failed antenna is contained in antennas specified by information from the mobile station, generation processing of transmission code words is performed by a combination of antennas that does not contain the failed antenna.

11. A base transceiver station that performs radio communication with a mobile station having a plurality of mobile antennas using a plurality of base antennas, the base transceiver station comprising:
radio equipment connected to each of the plurality of base antennas set up in local equipment or each of predetermined groups of the plurality of base antennas to perform radio communication processing for a connected one of the plurality of base antennas; and
a radio equipment controller connected to the plurality of pieces of radio equipment via individual digital interfaces to perform baseband signal processing of a communication signal, wherein
the radio equipment include a first maintenance monitoring unit that detects a failure of the radio equipment and outputs first failure information corresponding to the detected failure to the digital interface to which the radio equipment is connected in each piece of radio equipment, and
the radio equipment controller includes:
a second maintenance monitoring unit that outputs second failure information obtained by collecting the first failure information of each piece of the radio equipment from each of the digital interfaces and summarizing the first failure information; and
a baseband signal processing unit that determines a failed antenna based on the second failure information and exercises control so that, when the failed antenna is contained in antennas specified by information from the mobile station, generation processing of transmission code words is performed by a combination of antennas that does not contain the failed antenna.

12. The base transceiver station according to claim 10 or 11, wherein
when streams that can be transmitted decrease by the combination of antennas, the baseband signal processing unit adjusts an amount of data in generation processing of the transmission code words.

13. The base transceiver station according to any of claims 9, 11, and 12, further comprising:
an interface failure detection unit that detects the failure of each of the digital interfaces and outputs third failure information corresponding thereto in the radio equipment controller, wherein
the second maintenance monitoring unit outputs the second failure information by summarizing each piece of the first failure information and third failure information.

14. The base transceiver station according to any of claims 8 to 13, wherein
the baseband signal processing unit sets a data size of the transmission code words to zero for antennas for which no generation processing of the transmission code words is performed.
